# EUROPÄISCHE PATENTANMELDUNG

(11) **EP 0 736 767 A1**
(43) Veröffentlichungstag der Anmeldung: **09.10.1996**
(21) Anmeldenummer: 95810234.5
(22) Anmeldetag: 07.04.1995
(51) Int. Cl.: G01N 21/64, G01N 21/77

(54) **Optische Detektionsvorrichtung für analytische Messungen an chemischen Substanzen**

(71) Anmelder: CIBA-GEIGY AG, 4002 Basel (CH)
(72) Erfinder: Bruno,Alfredo Emilio,Dr., CH-4104 Oberwil (CH); Barnard,Steven Mark,Dr., CH-4057 Basel (CH); Rouilly,Marizel,Dr., CH-5073 Gipf-Oberfrick (CH)

(57) **Zusammenfassung**

In der optischen Detektiervorrichtung (1) bilden der Anregungslichtleiter (11) und der Emissionslichtleiter (12) eine bauliche Einheit mit der dem Fluoreszenzwandler (4) zugewandten Endfläche (14). Die Endfläche (14) stimmt körperlich im wesentlichen mit einer der Begrenzungsflächen der beiden Lichtleiter (11,12) überein. Dadurch lässt sich die Detektionsvorrichtung (1) in einfacher Weise in einen optischen und in einen mechanischen Teil zerlegen, die nur über die Endfläche (14) optischen Kontakt haben. Sämtliche Elemente im optischen Lichtweg sind in mechanisch stabiler Weise mittels des Indexanpassungsmediums (20) verbunden, wodurch sich das Licht zwischen der Lichtquelle (10) und dem photoelektrischen Fühler (13) nur in Medien ausbreitet, die einen vergleichbaren Brechungsindex haben. Die Lichtquelle (10) ist bevorzugt eine lichtemittierende Diode.

Mehrere dieser Detektionsvorrichtungen können zu einem kompakten Detektiergerät zusammengefasst werden, mit dem sich in einer Messung die Substanz (3) bezüglich mehrerer Inhaltsstoffe untersuchen lässt.

## Beschreibung

Die Erfindung betrifft eine optische Detektionsvorrichtung gemäss dem Oberbegriff des Anspruchs 1 sowie ein entsprechendes optisches Detektiergerät und ein entsprechendes optisches Analysegerät für analytische Messungen an chemischen Substanzen.

Messvorrichtungen für qualitative und quantitative chemische Analysen von Substanzen sind dem Fachmann in grosser Zahl bekannt. Speziell für die Analyse kleiner Probenvolumina werden heute Techniken eingesetzt, die beispielsweise auf Elektrophorese oder Chromatographie basieren, oder bei denen die Substanz ohne vorherige Trennung spektroskopisch untersucht wird. In beiden Fällen erfolgt die Detektion der Inhaltsstoffe sehr oft mittels optischer Methoden, so dass der Entwicklung neuer optischer Detektionsvorrichtungen eine sehr wichtige Rolle im Hinblick auf die instrumentelle Verbesserung im Bereich der Analyse zukommt. Optische Detektionsvorrichtungen umfassen unter anderem Anordungen für Absorptions-, Brechungsindex- und Fluoreszenzmessungen.

Der Klassische optische Detektor besteht aus einer optischen Bank, auf der die einzelnen Komponenten montiert sind, die meist aus Materialien mit sehr unterschiedlichen physikalischen Eigenschaften (z. B. thermische Dehnung, Brechungsindex, elastische Konstanten) bestehen. Die Empfindlichkeit und das Auflösevermögen solcher Systeme ist deshalb meist durch Rausch- und Drifteffekte begrenzt, die durch die thermische Expansion der verwendeten Materialien, durch Vibrationen und Schlieren-Effekte im optischen Lichtweg, welcher an der Lichtquelle beginnt und am photoelektrischen Fühler endet, verursacht werden. Rausch- und Driftquellen sind hauptsächlich die verschiedenen Übergänge zwischen optisch unterschiedlich dichten Bereichen (im folgenden als "optische Übergange" bezeichnet), an denen Reflexionen und Brechungserscheinungen auftreten. Neben dem Streulicht haben auch die Intensitätsfluktuationen der Lichtquelle einen negativen Einfluss insbesondere auf Fluoreszenzmessungen, denn die Fluktuationen manifestieren sich sowohl im Fluoreszenzlicht als auch im Hintergrundrauschen.

Bei einer bekannten Anordnung für Fluoreszenzmessungen wird die zu analysierende Substanz mit einem fluoreszierenden Mittel in Kontakt gebracht, welches durch ein Anregungslicht zur Fluoreszenz gebracht wird. Bestimmte Inhaltsstoffe der Substanz, für die das fluoreszierende Mittel empfindlich ist, haben eine Änderung des Fluoreszenzlichts, beispielsweise bezüglich seiner Intensität, zur Folge, welche von einem photoelektrischen Fühler registriert wird. Fluoreszierende Mittel, welche diese Eigenschaft aufweisen, dass sie bei Kontaktierung durch einen Inhaltsstoff ihr Fluoreszenzlicht ändern, werden fortan "Fluoreszenzwandler" genannt.

Eine Möglichkeit, die erwähnten Nachteile der Klassischen optischen Detektoren zu beseitigen, ist beispielsweise in der EP-A-0616211 offenbart. Die hierin zugrundeliegende Idee ist es, die Anzahl der optischen Übergänge zwischen der Lichtquelle und dem photoelektrischen Fühler auf ein Minimum zu reduzieren. Dies wird erreicht, indem das von der Lichtquelle emittierte Anregungslicht durch einen speziellen Lichtleiter, der einen Brechungsindexgradienten aufweist, auf eine Kapillare, welche die Substanz enhält, geführt wird und das von der Kapillare kommende Emissionslicht durch einen weiteren Lichtleiter auf den photoelektrischen Fühler geführt wird. In sämtlichen Übergangsbereichen zwischen den einzelnen optischen Elementen befindet sich ein Indexanpassungsmedium, dessen Brechungsindex im wesentlichen mit demjenigen des Wandmaterials der Kapillare übereinstimmt. Zusätzlich verbindet dieses Indexanpassungsmedium die einzelnen optischen Elemente mechanisch stabil. Dieses Konzept hat den Vorteil, dass sich das Anregungslicht und das Emissionslicht mit Ausnahme des Innenraums der Kapillare stets in Medien mit im wesentlichen konstanter optischer Dichte ausbreiten. Dadurch wird das Streulicht reduziert. Die mechanisch stabile Anordnung hat den Vorteil, das Vibrationen den optischen Lichtweg nicht stören. Da die Lichtleiter und die Kapillare vergleichbare thermische Dehnungskoeffizienten aufweisen und die einzelnen Elemente durch das Indexanpassungsmedium im thermischen Kontakt miteinander stehen, sind auch thermisch bedingte Störeffekte praktisch nicht vorhanden. Diese Vorgehensweise, den optischen Lichtweg derart zu gestalten, dass das Licht sich mit minimalen Brechungen und Reflexionen ausbreitet, und gemäss der die verschiedenen optischen Elemente in einer mechanisch möglichst stabilen Konstruktion angeordnet werden sowie in direktem Kontakt zueinander stehen, um das Erreichen des thermischen Gleichgewichts zu erleichtern, wird in der Literatur üblicherweise mit "pigtailing" bezeichnet (siehe z. B. A. E. Bruno *et al*., Trends in analytical chemistry, vol. 13, no. 5, 190 (1994)).

Das Problem der Intensitätsfluktuationen wird in der EP-A-0616211 durch die Verwendung von lichtemittierenden Dioden (LED) als Lichtquelle gelöst. LEDs, die mit stabilisierten Spannungsquellen versorgt werden, sind bezüglich der Lichtintensität um Grössenordnungen stabiler als Laser oder konventionelle Lichtquellen. Sie haben praktisch keine Intensitätsfluktuationen mehr.

Optische Detektiergeräte, wie sie unter anderem in der EP-A-0616211 beschrieben sind, werden typischerweise in der Kapillar-Elektrophorese (CE), in der Chromatographie unter Verwendung von Mikrokolonnen, in der Kapillar-Chromatographie und im besonderen in der High Performance Liquid Chromatography (HPLC) eingesetzt. Solche Geräte sind jedoch mit einem grossen Aufwand in der Herstellung verbunden. Sowohl der Anregungslichtleiter als auch der Emissionslichtleiter müssen äusserst genau dimensioniert sein und jeweils einzeln exakt auf der Kapillare positioniert werden, um eine möglichst effizient Beleuchtung der Probe zu erreichen, und um die den photoelektrischen Fühler treffende Emissionslichtintensität zu optimieren.

Soll die zu untersuchende Substanz gewechselt werden, so muss meistens der gesamte optische Aufbau neu erfolgen, und die einzelnen optischen Elemente müssen neu justiert werden.

Bei der Verwendung von Fluoreszenzwandlern zum Nachweis von Inhaltsstoffen einer Substanz verkürzen auch Ausbleicheffekte (photobleaching) - vor allem bei hohen Anregungslichtintensitäten, die für genügend starke Fluoreszenz oft wünschenswert sind - die Lebensdauer eines solchen Gerätes erheblich. Photobleaching ist der Effekt, dass das fluoreszierende Mittel seine Fluoreszenzeigenschaft mit zunehmender Beleuchtungszeit verliert. Dieser Effekt macht sich bei hohen Anregungslichtintensitäten natürlich früher bemerkbar. Somit wird der zum Nachweis benötigte Fluoreszenzwandler mit der Zeit unbrauchbar. Auch in diesem Falle muss der gesamte optische Aufbau neu erfolgen, und die optischen Elemente müssen neu justiert werden.

Solche optischen Detektiergeräte weisen somit die Einschränkung auf, dass immer dann, wenn der die Substanz und den Fluoreszenzwandler beinhaltende Teil unbrauchbar geworden ist, sei es durch Degradationseffekte oder durch einen Wechsel der zu untersuchenden Substanz, der gesamte optische Teil in aufwendiger, zeitintensiver Weise ebenfalls neu angepasst werden muss.

Diese Einschränkung verhindert es, dass solche optischen Detektiergeräte in einer kompakten, mechanisch unempfindlichen, einfach zu handhabenden Form für beispielsweise den mobilen Einsatz in einem breiten Anwendungsfeld ausserhalb moderner Analyse- und Forschungslabors zur Verfügung stehen.

Ausgehend von diesem Stand der Technik ist es deshalb eine Aufgabe der Erfindung, eine optische Detektionsvorrichtung bereitzustellen, welche die vorne erwähnten Vorteile des pigtailing aufweist, und bei der die optischen Elemente derart baulich angeordnet sind, dass der die Substanz und den Fluoreszenzwandler umfassende Teil auswechselbar ist, ohne die gesamten optischen Elemente neu anzupassen und justieren zu müssen. Die optische Detekionsvorrichtung soll einfach und kostengünstig in der Herstellung sowie im Zusammenbau sein und sich für den mobilen Einsatz in einer Vielzahl von Anwendungsgebieten eignen. Ferner soll diese Vorrichtung kompakt sein, damit mehrere solcher Vorrichtungen zu einem optischen Detektiergerät zusammengesetzt werden können, mit dem eine Substanz bezüglich mehrerer Inhaltsstoffe untersucht werden kann.

Die diese Aufgabe lösende optische Detektionsvorrichtung für analytische Messungen an chemischen Substanzen ist durch die Merkmale des unabhängigen Anspruchs 1 gekennzeichnet. Gemäss der Erfindung ist also der Anregungslichtleiter derart mit dem Emissionslichtleiter verbunden, dass die beiden Lichtleiter im wesentlichen eine bauliche Einheit mit einer dem Fluoreszenzwandler zugewandten Endfläche bilden. Dabei stimmt die Endfläche körperlich im wesentlichen mit einer der Begrenzungsflächen der beiden genannten Lichtleiter überein.

Durch diese bauliche Massnahme lässt sich die erfindungsgemässe Vorrichtung typischerweise in zwei Teile zerlegen: in einen optischen Teil, der zumindest die Lichtquelle, die Lichtleiter sowie den photoelektrischen Fühler umfasst und der für den permanenten Gebrauch ausgelegt ist, sowie in einen mechanischen Teil, der zumindest den Fluoreszenzwandler, den Probenbehälter sowie die Substanz umfasst und der einfach auswechselbar ist. Somit muss bei Bedarf nur der auswechselbare Teil derart durch einen anderen ersetzt werden, dass das aus der Endfläche austretende Anregungslicht den Fluoreszenzwandler zumindest partiell trifft. Zusätzliche Manipulationen an dem optischen Teil sind bei dem Ersetzen nicht mehr notwendig. Die erfindungsgemässe Vorrichtung eignet sich daher insbesondere für die rationelle Massenproduktion, da der auswechselbare Teil beispielsweise für den Einmalgebrauch ausgelegt werden kann. Dadurch treten auch keine Probleme mehr mit dem photobleaching auf.

Ein weiterer Vorteil der erfindungsgemässen Vorrichtung ist es, dass der optische Teil qualitativ höherwertig produziert werden kann, weil er unabhängig von dem auswechselbaren Teil mehrfach verwendbar ist und somit eine höhere Lebensdauer aufweist.

Besonders günstig ist es, den Anregungslichtleiter und den Emissionslichtleiter durch ein Indexanpassungsmedium zu einer baulichen Einheit zu verbinden, weil dadurch Reflexionen und Brechungen an der Grenzfläche minimal sind.

Eine besonders bevorzugte Lichtquelle für die erfindungsgemässe Vorrichtung ist eine lichtemittierende Diode (LED), die, aus einer stabilisierten Spannungsquelle versorgt, deutlich stabilere Lichtintensitäten liefert als andere übliche Lichtquellen. Dadurch wird das Problem der Intensitätsfluktuationen des Anregungslichts, das besonders für Fluoreszenzmessungen ein wesentliches ist, gelöst.

Ferner weist die erfindungsgemässe Vorrichtung den Vorteil auf, dass der Fluoreszenzwandler bzw. der Probenbehälter nur noch durch eine Fläche, die körperlich im wesentlichen mit einer der Begrenzungsflächen der Lichtleiter übereinstimmt, nämlich die gemeinsame Endfläche der beiden Lichtleiter, optisch kontaktierbar sein muss und nicht durch mindestens zwei, wie es beispielsweise in der EP-A-0616211 offenbart ist. Dies bedeutet einen enormen Platzgewinn, was besonders für eine kompakte Ausführung vorteilhaft ist. Durch diese kompakte Form ist es möglich, mehrere, bevorzugt sechs, erfindungsgemässe optische Detektionsvorrichtungen zu einem optischen Detektiergerät zusammenzufassen. Dieses erfindungsgemässe Gerät kann beispielsweise so ausgestaltet sein, dass sich sämtliche Anregungslichtleiter und Emissionslichtleiter in paarweise zueinander gehörenden Aufnahmeöffnungen eines Halterungskörpers befinden. Ferner können sämtliche Probenbehälter durch eine gemeinsame Messkammer gebildet sein. Weiterhin ist es möglich, die Fluoreszenzwandler auf einem gemeinsamen Trägerelement anzuordnen. Dieses Trägerelement wird dann derart mit dem Halterungskörper verbunden, dass jedem Anregungs-/Emissionslichtleiter ein eigener Fluoreszenzwandler zugeordnet ist, der im wesentlichen nur von dem Anregungslicht getroffen wird, das aus der ihm zugeordneten Endfläche austritt. Da die Fluoreszenzwandler für verschiedene Inhaltsstoffe der in der Messkammer enthaltenen Substanz empfindlich sein können, bietet dieses erfindungsgemässe Gerät den Vorteil, dass sich mit ihm mehrere Inhaltsstoffe der Substanz detektieren lassen. Ausserdem kann der mechanische Teil, der zumindest die Fluoreszenzwandler, die Messkammer sowie die Substanz umfasst, in einfacher Weise ausgewechselt werden, ohne dass Änderungen oder Nachjustierungen an dem optischen Teil, der zumindest die Anregungs-/Emissionslichtleiter, die Lichtquellen sowie die photoelektrischen Fühler umfasst, notwendig sind. Das erfindungsgemässe Gerät hat somit eine kompakte Form, ist einfach zu bedienen, kostengünstig herzustellen und eignet sich daher für den mobilen Einsatz in einer Vielzahl von Anwendungsgebieten.

Weitere vorteilhafte Massnahmen und bevorzugte Ausgestaltungen der erfindungsgemässen Vorrichtung bzw. des erfindungsgemässen Geräts ergeben sich aus den abhängigen Ansprüchen.

Im folgenden wird die Erfindung anhand von Ausführungsbeispielen und anhand der Zeichnung näher erläutert. In der schematischen, nicht massstäblichen Zeichnung zeigen:
- Fig. 1: einen Schnitt durch ein erstes Ausführungsbeispiel der erfindungsgemässen Vorrichtung,
- Fig. 2: einen Schnitt durch den optischen Teil einer Variante des ersten Ausführungsbeispiels der erfindungsgemässen Vorrichtung,
- Fig. 3: einen Schnitt durch den optischen Teil eines zweiten Ausführungsbeispiels der erfindungsgemässen Vorrichtung,
- Fig. 4: einen Schnitt durch den optischen Teil eines dritten Ausführungsbeispiels der erfindungsgemässen Vorrichtung,
- Fig. 5: einen Schnitt durch den optischen Teil eines vierten Ausführungsbeispiels der erfindungsgemässen Vorrichtung,
- Fig. 6: eine perspektivische Darstellung eines Ausführungsbeispiels des erfindungsgemässen optischen Detektiergeräts (Vorderseite im Schnitt dargestellt),
- Fig. 7: eine Aufsicht auf ein Ausführungsbeispiel des Trägerelements mit den Fluoreszenzwandlern des erindungsgemässen optischen Detektiergeräts und
- Fig. 8: eine Blockdarstellung eines Ausführungsbeispiels des erfindungsgemässen optischen Analysegeräts, das eine erfindungsgemässe optische Vorrichtung bzw. ein erfindungsgemässes optisches Gerät umfasst.

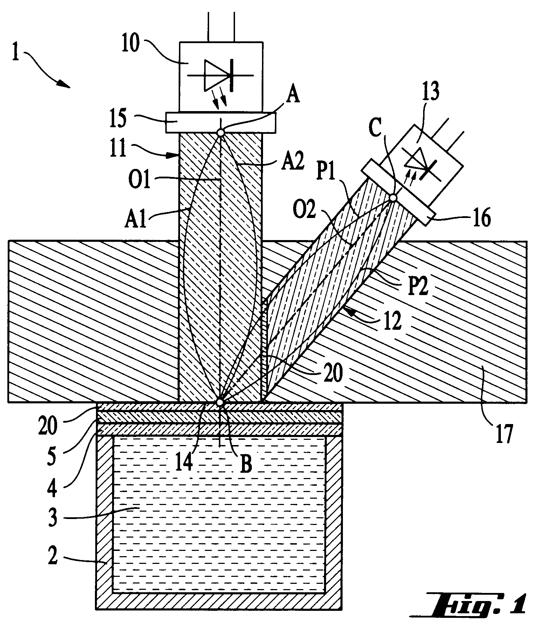

Bei der nachstehenden Beschreibung der bevorzugten Ausführungsbeispiele anhand der Zeichnung sind gleiche oder von der Funktion her gleichwertige Teile mit den gleichen Bezugszeichen versehen. Figur 1 zeigt schematisch einen Schnitt durch ein erstes Ausführungsbeispiel der erfindungsgemässen optischen Detektionsvorrichtung. Letztere ist als Ganzes mit 1 bezeichnet. Die erfindungsgemässe Vorrichtung umfasst typischerweise einen Probenbehälter 2 für eine Substanz 3, einen Fluoreszenzwandler 4, der von der Substanz 3 kontaktierbar ist, eine Lichtquelle 10 zur Emission eines Anregungslichts, einen photoelektrischen Fühler 13, beispielsweise eine Photodiode, für ein von dem Fluoreszenzwandler 4 kommendes Emissionslicht sowie zwei Lichtleiter, nämlich einen Anregungslichtleiter 11 und einen Emissionslichtleiter 12. In dem ersten Ausführungsbeispiel umfassen die beiden Lichtleiter 11,12 jeweils ein Material in dem der Brechungsindex nicht konstant ist, sondern einen Gradienten aufweist, der im wesentlichen senkrecht auf der Hauptausbreitungsrichtung des Lichts in dem Lichtleiter steht. Die Hauptausbreitungsrichtungen des Lichtes sind durch optische Achsen O1 bzw. O2 festgelegt.

Die Lichtquelle 10, der Anregungslichtleiter 11 und der Fluoreszenzwandler 4 sind relativ zueinander so angeordnet, dass das von der Lichtquelle 10 emittierte Anregungslicht in den Anregungslichtleiter 11 eintreten kann und von letzterem im wesentlichen so geführt wird, dass es zumindest einen Teil des Fluoreszenzwandlers 4 trifft.
Der Fluoreszenzwandler 4, der Emissionslichtleiter 12 und der photoelektrische Fühler 13 sind relativ zueinander so angeordnet, dass zumindest ein Teil des von dem Fluoreszenzwandler kommenden Emissionslichts, im wesentlichen durch den Emissionslichtleiter 12 geführt, auf den photoelektrischen Fühler 13 trifft.

Das Anregungslicht ruft in dem Fluoreszenzwandler 4 Fluoreszenz hervor. Das so emittierte Emissionslicht trifft auf den photoelektrischen Fühler 13 und kann mittels diesem in ein elektrisches Signal transformiert werden, das dann in üblicher Weise für die Weiterverarbeitung und Auswertung zur Verfügung steht. Kontaktiert ein bestimmter Inhaltsstoff der Substanz 3, für den der Fluoreszenzwandler 4 empfindlich ist, den Fluoreszenzwandler 4, so resultiert eine Änderung des Emissionslichts, beispielsweise bezüglich seiner Intnsität, die der photoelektrische Fühler 13 registriert. Auf diese Weise lassen sich analytische Messungen an chemischen Substanzen durchführen.

Fluoreszenzwandler dieser Art sind an sich Stand der Technik und sind dem Fachmann in grosser Zahl bekannt. Sie bedürfen daher keiner näheren Erläuterung. Zur Untersuchung der Substanz 3 bezüglich eines speziellen Inhaltsstoffs ist natürlich jeweils ein solcher Fluoreszenzwandler zu wählen, der für diesen speziellen Inhaltsstoff empfindlich ist.

Erfindungsgemäss ist der Anregungslichtleiter 11 derart mit dem Emissionslichtleiter 12 verbunden, das die beiden Lichtleiter im wesentlichen eine bauliche Einheit mit einer dem Fluoreszenzwandler zugewandten Endfläche 14 bilden. Erfindungsgemäss stimmt ferner diese Endfläche 14 körperlich im wesentlichen mit einer der Begrenzungsflächen der beiden Lichtleiter 11,12 überein, und die Endfläche 14 bildet im wesentlichen sowohl die optische Austrittsfläche für das von der Lichtquelle 10 durch den Anregungslichtleiter 11 gelangende Licht als auch die optische Eintrittsfläche für das von dem Fluoreszenzwandler 4 kommende Emissionslicht. Die optische Austrittsfläche ist diejenige Fläche, durch die das Anregungslicht, welches den Fluoreszenzwandler 4 trifft, die aus Anregungs- 11 und Emissionslichtleiter 12 gebildete bauliche Einheit verlässt. Die optische Austrittsfläche kann - muss aber nicht - mit einer der Begrenzungsflächen des Anregungslichtleiters 11 übereinstimmen. Die optische Eintrittsfläche ist diejenige Fläche, durch die das Emissionslicht, welches den photoelektrischen Fühler 13 trifft, in die aus Anregungs- 11 und Emissionslichtleiter 12 gebildete bauliche Einheit eintritt. Die optische Eintrittsfläche kann - muss aber nicht - mit einer der Begrenzungsflächen des Emissionslichtleiters 12 übereinstimmen.

Vorteilhaft ist es, die beiden Lichtleiter 11,12 mittels eines Indexanpassungsmediums 20 zusammenzukitten. Dieses Indexanpassungsmedium ist ein transparentes Haftmittel, das einen Brechungsindex aufweist, der bis auf im wesentlichen +/- 20% mit den Brechungsindices der beiden Lichtleiter 11,12 übereinstimmt. Geeignete Haftmittel sind beispielsweise Zwei-Komponenten-Kleber, wie sie z. von dem Anmelder unter dem Markennamen Araldit® XW 396 und XW 397 erhältlich sind. Besonders vorteilhaft ist es, als Indexanpassungsmedium ein transparentes Haftmittel zu verwenden, dass durch Beaufschlagung mit einer geeigneten Energieform, üblicherweise UV-Licht, aushärtbar ist. Durch diese Massnahme ist es nämlich einfacher, die endgültige Justierung durchzuführen. Das Haftmittel härtet erst dann aus, wenn es - nach einer korrekten Positionierung der beiden Lichtleiter 11,12 relativ zueinander - mit der geeigneten Energieform beaufschlagt wird.

In dem in Figur 1 dargestellten bevorzugten Ausführungsbeispiel der erfindungsgemässen Vorrichtung besteht der Anregungslichtleiter 11 aus einem optischen Filter 15, dessen Funktion weiter hinten erläutert ist, und einem optischen Gradienten-Index-Element, das besonders bevorzugt eine GRIN-Linse ist. Solche GRIN-Linsen sind Stand der Technik (siehe z. B. A. E. Bruno *et al*., Trends in analytical chemistry, vol. 13, no. 5, 190 (1994)) und sind beispielsweise unter dem Markennamen SELFOC® von NIPPON SHEET GLASS Co. Ltd. erhältlich. Die GRIN-Linse ist im wesentlichen ein zylinderförmiger Stab mit einer parabolischen Verteilung des Brechungsindex. Der Brechungsindex ist am grössten entlang der Zylinderachse, die mit der optischen Achse O1 übereinstimmt, und nimmt mit dem senkrechten Abstand von der Zylinderachse ab. Der Brechungsindex-Gradient sorgt dafür, dass Lichtstrahlen A1,A2, welche in die Linse eindringen, in dem Stab einem sinusförmigen Weg folgen. Die Länge dieser GRIN-Linsen wird üblicherweise in der Einheit "pitch" angegeben. In einem Stab der Länge 1 pitch durchläuft ein Lichtstrahl gerade eine Periode des Sinus. Befindet sich beispielsweise an einer der planaren Begrenzungsflächen einer 0,5-pitch GRIN-Linse auf der optischen Achse eine punktförmige Lichtquelle, so befindet sich auf der gegenüberliegenden Begrenzungsfläche ebenfalls auf der optischen Achse das Bild der Lichtquelle. Ist in der gleichen Anordnung die GRIN-Linse eine mit der Länge 0,25 pitch, so verlässt das Licht die Linse als paralleles Licht. Bei Verwendung einer GRIN-Linse, deren Länge kleiner als 0,5 pitch ist, wird das Licht einer punktförmigen Lichtquelle, die sich in einer gewissen Entfernung von der planaren Begrenzungsfläche der Linse befindet, ebenfalls wieder in einem Punkt fokussiert, der dann jedoch ausserhalb der Linse liegt.

Mit GRIN-Linsen lassen sich also die gleichen optischen Abbildungen nach im wesentlichen den gleichen Abbildungsregeln durchführen wie mit klassischen sphärischen Linsen und auch die verwendeten Bezeichnungen - wie z. B. Fokal- oder Brennpunkt, Hauptebene - entsprechen denen aus der klassischen geometrischen Optik. GRIN-Linsen haben jedoch den grossen Vorteil, dass ihre Linseneigenschaften durch Zusammenkitten mit anderen Elementen nicht gestört werden. Das ist unterschiedlich zu klassischen Linsen, deren optischen Abbildungseigenschaften auf den Brechungen an den beiden gekrümmten Begrenzungsflächen beruhen. GRIN-Linsen sind deshalb zur Realisierung des pigtailing-Konzeptes besonders geeignet.

Im Rahmen des pigtailing-Konzeptes finden auch häufig optische Fasern Verwendung. Diese unterliegen jedoch der Einschränkung, dass das aus ihrem Ende austretende Licht stets divergiert. Im Vergleich dazu haben GRIN-Linsen den Vorteil, dass mit ihnen durch eine geeignete Wahl der pitch-Länge das austretende Licht sowohl parallel als auch divergent gemacht als auch fokussiert werden kann.

Der Emissionslichtleiter 12 in dem ersten Ausführungsbeispiel, das in Figur 1 dargestellt ist, besteht aus einem zweiten optischen Filter 16, dessen Funktion weiter hinten erläutert ist, und einem optischen Gradienten-Index-Element, das besonders bevorzugt eine GRIN-Linse ist. Die beiden Lichtleiter 11,12 sind derart zu einer im wesentlichen baulichen Einheit zusammengefügt, besonders bevorzugt mittels dem Indexanpassungsmedium 20 zusammengekittet, dass der Anregungslichtleiter 11 und der Emissionslichtleiter 12 relativ zueinander geneigt sind und die Hauptausbreitungsrichtungen des Lichtes, festgelegt durch die optischen Achsen O1,O2, schiefwinklig zueinander stehen. Diese Massnahme bringt den Vorteil mit sich, dass das Streulicht, welches im Bereich des Fluoreszenzwandlers 4 durch Reflexion erzeugt wird, den photoelektrischen Fühler 13 nur noch in stark abgeschwächter Form erreicht. Gerade bei Fluoreszenzmessungen wird das Signal-zu-Rausch-Verhältnis ganz entscheidend durch Streulicht beeinflusst. Durch die schiefwinklige Anordnung der beiden Lichtleiter 11,12 relativ zueinander trifft das Anregungslicht unter einem grösseren Winkel zur optischen Achse O2 des Emissionslichtleiters 12 auf den Fluoreszenzwandler 4 als z. B. bei einer parallelen Anordnung der beiden Lichtleiter 11,12. Folglich ist auch das im Bereich des Fluoreszenzwandlers 4 reflektierte Licht relativ zur optischen Achse O2 des Emissionslichtleiters 12 stärker geneigt. Überschreitet aber der Einfallswinkel des Lichts auf die GRIN-Linse einen bestimmten Grenzwert, so kann das Licht nicht mehr in die Linse eindringen. Deshalb reduziert die schiefwinklige Anordnung der beiden Lichtleiter 11,12 relativ zueinander, die Intensität des Streulichts, das den photoelektrischen Fühler 13 erreicht.

Die bauliche Einheit aus Anregungs- 11 und Emissionslichtleiter 12 wird zum Beispiel hergestellt, indem eine der beiden GRIN-Linsen des Anregungs- 11 respektive des Emissionslichtleiters 12 schiefwinklig zu seiner optischen Achse O1 respektive O2, rein beispielsweise unter einem Winkel von etwa 45°, geschnitten und die Schnittfläche anschliessend poliert wird. Die beiden GRIN-Linsen werden dann mittels des Indexanpassungsmediums 20 zusammengekittet.

Die Dimensionen der beiden GRIN-Linsen des Anregungs- und des Emissionslichtleiters 11,12 sind so bemessen, dass eine Knotenlinie der aus den beiden Lichtleitern 11,12 gebildeten baulichen Einheit im wesentlichen im Bereich des Fluoreszenzwandlers liegt. Die Knotenlinie ist eine gerade Linie, die einen Fokalpunkt des Anregungslichleiters 11 mit einen Fokalpunkt des Emissionslichtleiters 12 verbindet. Besonders vorteilhaft ist es, wenn die Knotenlinie zu einem Punkt entartet ist, d. h. Anregungs- und Emissionslichtleiter 11,12 haben einen gemeinsamen Fokalpunkt B.

Ferner umfasst in dem ersten Ausführungsbeispiel der erfindungsgemässen Vorrichtung der Anregungslichtleiter 11 das optische Filter 15, das bevorzugt ein Interferenzfilter ist. Durch dieses Filter ist es möglich, die Wellenlänge(n) des Anregungslichts, welches auf den Fluoreszenzwandler 4 trifft, auszuwählen oder zu begrenzen. Der Emissionslichtleiter 12 umfasst das zweite optische Filter 16, das bevorzugt ein Interferenzfilter ist. Es dient der Selektion oder der Begrenzung der Wellenlänge(n) des Emissionslichts, das auf den photoelektrischen Fühler trifft. Da üblicherweise das Emissionslicht als Fluoreszenzlicht eine andere Wellenlänge aufweist als das Anregungslicht, welches die Fluoreszenz hervorruft, kann mittels des zweiten Filters 16 die Intensität des unerwünschten Streulichts weiter reduziert werden, was sich vorteilhaft auf das Signal-zu-Rauschverhältnis auswirkt.

Wie weiter vorne bereits erläutert, ist die Lichtquelle 10 besonders bevorzugt eine lichtemittierende Diode (LED), die kohärentes oder inkohärentes Licht ausstrahlt. In dem ersten Ausführungsbeispiel ist beispielsweise die Lichtquelle 10 mit dem optischen Filter 15 zusammengekittet, bevorzugt durch ein Haftmittel entsprechend dem Indexanpassungsmittel 20, welches die beiden GRIN-Linsen des Anregungs- 11 und des Emissionslichtleiters 12 verbindet. Vor dem Zusammenkitten kann das Plexiglasgehäuse, welches üblicherweise den LED-Kristall umgibt, so weit entfernt werden, dass das optische Filter in unmittelbarer Nähe des LED-Kristalls positioniert werden kann. Das optische Filter 15 ist mit der ihm zugewandten Begrenzungsfläche der GRIN-Linse des Anregungslichtleiters 11 zusammengekittet, bevorzugt ebenfalls durch ein Haftmittel entsprechend dem Indexanpassungsmedium 20. Es ist aber beispielsweise auch möglich, in das Plexiglasgehäuse, welches den LED-Kristall umgibt, zunächst ein Loch zu bohren. Die Tiefe dieses Loches in dem Gehäuse reicht bis in die unmittelbare Nähe des LED-Kristalls, damit das optische Filter 15 und die GRIN-Linse des Anregungslichtleiters 11 so nahe wie möglich an dem LED-Kristall positioniert werden können, um eine möglichst hohe Effizienz des Anregungslichts zu erzielen. Das optische Filter 15 und die GRIN-Linse des Anregungslichtleiters 11 werden in das gebohrte Loch eingebracht und dort durch ein Haftmittel verbunden. Besonders bevorzugt ist hierbei wieder ein Haftmittel entsprechend dem Indexanpassungsmedium 20.

Die Verbindung zwischen dem zweiten optischen Filter 16 und der ihm zugewandten Begrenzungsfläche der GRIN-Linse des Emissionslichtleiters 12 sowie die Verbindung zwischen dem zweiten optischen Filter 16 und dem photoelektrischen Fühler 13 erfolgt beispielsweise durch ein Haftmittel, bevorzugt ein solches, das dem Indexanpassungsmedium 20 entspricht.

Natürlich können sich sowohl zwischen der Lichtquelle 10 und der GRIN-Linse des Anregungslichtleiters 11 als auch zwischen der GRIN-Linse des Emissionslichtleiters 12 und dem photoelektrischen Fühler 13 jeweils mehr als ein optisches Filter befinden.

In dem ersten Ausführungsbeispiel, das in Figur 1 dargestellt ist, befinden sich der Anregungs- 11 und der Emissionslichtleiter 12 in relativ zueinander geneigten Aufnahmeöffnungen eines Halterungskörpers 17. Dabei schliesst die Endfläche 14 der baulichen Einheit, die von den beiden Lichtleitern 11,12 erfindungsgemäss gebildet wird, im wesentlichen bündig mit einer der körperlichen Begrenzungsflächen des Halterungskörpers 17 ab. Natürlich kann bei dieser Bauweise das weiter vorne beschriebene Zusammenfügen der beiden Lichtleiter 11,12 erst nach ihrer Einbringung in die Aufnahmeöffnungen des Halterungskörpers 17 erfolgen.

Der mechanische Teil des ersten Ausführungsbeispiels der erfindungsgemässen Vorrichtung umfasst den die Substanz 3 enthaltenden Probenbehälter 2, den Fluoreszenzwandler 4, sowie einen Träger 5, der z. B. aus Glas oder Kunststoff gefertigt ist. Besonders vorteilhaft ist es, wenn der Träger 5 aus einem Material besteht, dessen Brechungsindex bis auf im wesentlichen +/- 20% mit den Brechungsindices der beiden Lichtleiter 11,12 übereinstimmt; denn dadurch werden Reflexionen des Anregungslichts an dem Träger 5 praktisch vermieden, und somit wird das Streulicht, das den photoelektrischen Fühler 13 erreicht, reduziert. Auf dem Träger 5, der beispielsweise eine Dicke von etwa 100-150 µm aufweist, ist der Fluoreszenzwandler deponiert, rein beispielsweise in Form einer Schicht von weniger als ∼ 15 µm Dicke. Der Träger 5 mit dem Fluoreszenzwandler 4 bildet im wesentlichen eine Begrenzungsfläche des Probenbehälters 2, und zwar derart, dass der Fluoreszenzwandler 4 dem Innenraum des Probenbehalters 2 zugewandt ist und somit von der Substanz 3 kontaktiert werden kann. Der Probenbehälter 2 ist rein beispielsweise im wesentlichen quaderförmig ausgestaltet. In ihm kann sich die Substanz 3 ruhend oder auch strömend befinden. Für die letztere Alternative ist es natürlich notwendig, dass der Probenbehälter 2 zusätzlich Ein-bzw. Auslassöffnungen aufweist.

In dem ersten Ausführungsbeispiel der erfindungsgemässen Vorrichtung erfolgt die Verbindung zwischen dem mechanischen Teil und dem optischen Teil, der zumindest die Lichtquelle 10, die Lichtleiter 11,12 sowie den photoelektrischen Fühler 13 umfasst, indem der Träger 5 einfach mittels dem Indexanpassungsmedium 20 derart auf der Endfläche 14 und dem Halterungskörper 17 befestigt wird, dass das aus der Endfläche 14 austretende Anregungslicht den Fluoreszenzwandler 4 zumindest partiell trifft.

In dem in Figur 1 dargestellten Ausführungsbeispiel ist die bauliche Einheit aus Anregungs- 11 und Emissionslichtleiter 12 so realisiert, dass beide GRIN-Linsen 0,5-pitch-Linsen darstellen, die den gemeinsamen Fokalpunkt B besitzen, der im Bereich des Fluoreszenzwandlers 4 liegt. Dass dieser Fokalpunkt B in der Figur 1 räumlich von dem Fluoreszenzwandler 4 etwas getrennt erscheint, liegt an der nicht massstäblichen Darstellung. Rein beispielhafte Zahlenwerte betragen: ∼1 µm für die Dicke des Indexanpassungenmediums 20; ∼100 µm für die Dicke des Trägers 5; ∼1 µm für die Dicke des Fluoreszenzwandlers 4. Diese Zahlen demonstrieren, dass der Abstand zwischen dem Fokalpunkt B und dem Fluoreszenzwandler 4 praktisch vernachlässigbar klein ist. Der Strahlengang ist in Figur 1 durch die Lichstrahlen A1,A2 des Anregungslichts sowie durch Lichtstrahlen P1,P2 des Emissionslichts angedeutet. Das Anregungslicht, das von einem Punkt A kommt, wird durch die GRIN-Linse des Anregungslichtleiters 11 im Fokalpunkt B fokussiert und regt die Fluoreszenz in dem Fluoreszenzwandler 4 an. Zumindest ein Teil des Emissionslichts, das von dem Punkt B kommt, wird durch die GRIN-Linse des Emissionslichtleiters 12 auf den Punkt C refokussiert und gelangt dann durch das zweite optische Filter auf den photoelektrischen Fühler 13. In dieser Anordnung sind die Punkte A, B, C im wesentlichen optisch äquivalent, wodurch einerseits eine gute Anregung der Fluoreszenz und andererseits eine effiziente Sammlung des Emissionslichts erfolgt.

Das in Figur 1 dargestellte bevorzugte Ausführungsbeispiel der erfindungsgemässen Vorrichtung bringt den zusätzlichen Vorteil mit sich, dass das Konzept des pigtailing konsequent über den gesamten Lichtweg von der Lichtquelle 10 bis zum photoelektrischen Fühler 13 realisiert ist. Sämtliche optischen Elemente sind durch das Indexanpassungsmedium 20 in mechanisch stabiler Weise miteinander verbunden, so dass Vibrationen den Lichtweg nicht stören. Ferner ist die Anzahl der optischen Übergänge auf ein Minimum reduziert. Dadurch breitet sich das Anregungs- und das Emissionslicht mit Ausnahme des Bereichs des Fluoreszenzwandlers 4 stets in Medien mit im wesentlichen konstanter optischer Dichte aus, was das durch Reflexionen verursachte Streulicht reduziert. Da die einzelnen optischen Elemente vergleichbare thermische Dehnungen aufweisen und thermischen Kontakt untereinander haben, sind auch thermisch bedingte Störungen praktisch nicht vorhanden.

Im folgenden werden in nicht abschliessender Aufzählung einige Varianten des ersten Ausführungsbeispiels der erfindungsgemässen Vorrichtung erläutert.

Die Verbindung zwischen dem optischen Teil und dem mechanischen Teil kann auch derart erfolgen, dass der Träger 5 die Endfläche 14 direkt, also ohne Indexanpassungsmedium dazwischen, optisch kontaktiert. Dies ist beispielsweise möglich, indem der Träger 5 ausserhalb des Lichtweges an dem Halterungskörper 17 befestigt wird. Andererseits ist es möglich, den Probenbehälter 2 so zu gestalten, dass er den Träger 5 mit dem Fluoreszenzwandler 4 umfasst und dass die Wände des Probenbehälters bis an den Halterungskörper 17 heranreichen, an dem sie dann befestigt werden können. Durch den direkten Kontakt zwischen der Endfläche 14 und dem Träger 5 werden die Vorteile des pigtailing nicht eliminiert, da die beiden letzt genannten Teile besonders bevorzugt aus Materialien hergestellt sind, deren Brechungsindices bis auf im wesentlichen +/-20% übereinstimmen.

Ferner können der Probenbehälter 2, der Fluoreszenzwandler 4 und der Träger 5 auch in Form einer Kapillare für die Substanz 3 ausgestaltet sein. Die Kapillarwand übernimmt dann die Funktion des Trägers 5 und der Innenraum der Kapillare die Funktion des Probenbehälters 2. Der Fluoreszenzwandler 4 kann sich dabei im Inneren der Kapillare, z. B. als Schicht auf der Innenwand, befinden, oder die Kapillarwand ist aus einem Material gefertigt, dass sich als Fluoreszenzwandler eignet.

Die Anordnung des Anregungs- 11 und des Emissionslichtleiters 12 in Figur 1 ist rein beispielhaft. Natürlich ist die Einheit aus der Lichtquelle 10 und dem Anregungslichtleiter 11 mit der Einheit aus photoelektrischem Fühler 13 und Emissionslichtleiter 12 vertauschbar. Das heisst, der Emissionslichtleiter 12 mit dem photoelektrische Fühler 13 und der Anregungslichtleiter 11 mit der Lichtquelle 10 können auch so angeordnet sein, dass die optische Achse O2 des Emissionslichtleiters 12 senkrecht auf der Endfläche 14 steht und die optische Achse O1 des Anregungslichtleiters 11 schiefwinklig dazu.

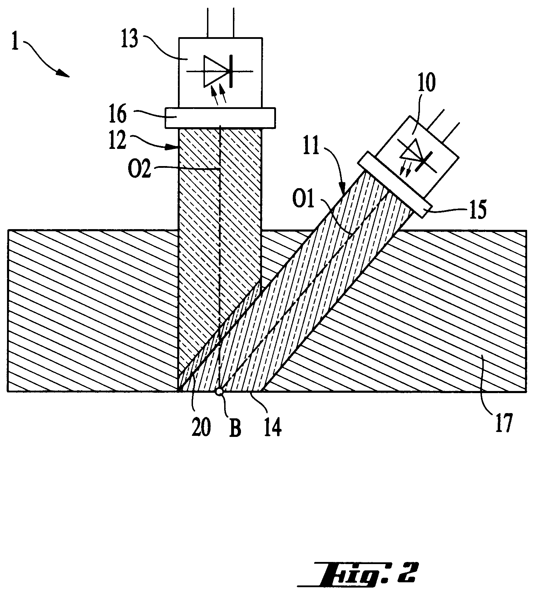

Weiterhin ist es bei der Herstellung der baulichen Einheit aus Anregungs-11 und Emissionslichtleiter 12 auch möglich, diejenige GRIN-Linse, deren optische Achse senkrecht auf der Endfläche 14 steht, abzuschneiden. Figur 2 zeigt den optischen Teil einer solchen ebenfalls bevorzugten Variante des ersten Ausführungsbeispiels. Bei dieser Variante sind Anregungs- 11 und Emissionslichtleiter 12 derart in dem Halterungskörper 17 angeordnet, dass die optische Achse O2 des Emissionslichtleiters 12 senkrecht auf der Endfläche 14 steht und die optische Achse O1 des Anregungslichtleiters 11 schiefwinklig dazu. Ausserdem ist bei dieser Variante diejenige GRIN-Linse, deren optische Achse senkrecht auf der Endfläche 14 steht, nämlich die des Emissionslichtleiters 12, abgeschnitten und an der GRIN-Linse des Anregungslichtleiters mittels des Indexanpassungsmediums 20 befestigt. Natürlich muss bei dieser Anordnung der beiden Lichtleiter 11,12 auch die GRIN-Linse des Anregungslichtleiters 11 an ihrer der Endfläche 14 zugewandten Begrenzungsfläche abgeschrägt und poliert werden.

Ausserdem können für den Anregungs- 11 und/oder für den Emissionslichtleiter 12 auch GRIN-Linsen anderer Länge verwendet werden, und die GRIN-Linsen des Anregungs-11 und des Emissionslichtleiters 12 können auch unterschiedliche pitch-Werte aufweisen. Rein beispielsweise kann die GRIN-Linse des Anregungslichtleiters - wie in Figur 1 gezeichnet - die Länge 0.5 pitch haben und die GRIN-Linse des Emissionslichtleiters 12 eine 0.25-pitch-Linse darstellen. Dadurch wird das Bündel des Emissionslichts, welches von dem Fokalpunkt B kommt, aufgeweitet und verlässt die GRIN-Linse des Emissionslichtleiters 12 als parallelels Licht. Dadurch wird in der Regel der photoelektrische Fühler 13 grossflächiger beleuchtet.

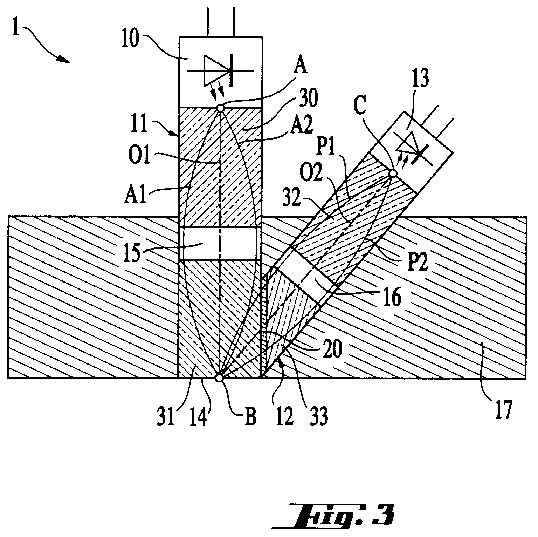

Figur 3 zeigt den optischen Teil eines zweiten bevorzugten Ausführungsbeispiels der erfindungsgemässen Vorrichtung. Unterschiede zu dem ersten Ausführungsbeispiel sind nur in den Ausgestaltungen des Anregungs- 11 und des Emissionslichtleiters 12 vorhanden. Die bisherigen Ausführungen bezüglich der anderen Elemente, z. B. des gesammten mechanischen Teils, haben auch für das zweite Ausführungsbeispiel Gültigkeit, insbesondere lassen sich die erläuterten Varianten und vorteilhaften Massnahmen auch hier verwenden.

In dem zweiten Ausführungsbeispiel umfasst der Anregungslichtleiter 11 eine erste GRIN-Linse 30, eine zweite GRIN-Linse 31 sowie das optische Filter 15. Der Emissionslichtleiter 12 umfasst eine dritte GRIN-Linse 32, eine vierte GRIN-Linse 33 sowie das zweite optische Filter 16. Die vier GRIN-Linsen 30,31,32,33 sind jeweils als 0,25-pitch-Linsen ausgelegt, so dass sowohl der Anregungs- 11 als auch der Emissionslichtleiter 12 jeweils eine 0,5-pitch-Linse bilden.

Die erste GRIN-Linse 30 wird, wie weiter vorne erläutert, optisch mit der Lichtquelle 10 verbunden. Die der Lichtquelle 10 abgewandten planaren Begrenzungsfläche der GRIN-Linse 30 wird mit dem optischen Filter 15 verbunden und letzteres mit einer planaren Begrenzungsfläche der zweiten GRIN-Linse 31. Besonders bevorzugt erfolgen die Verbindungen innerhalb des Anregungslichtleiters 11 mittels eines transparenten Haftmittels entsprechend dem Indexanpassungsmedium 20. In analoger Weise werden die dritte 32 und die vierte GRIN-Linse 33 mit dem dem zweiten optischen Filter 16 verbunden und der Emissionslichtleiter 12 mit dem photoelektrischen Fühler 13.

Wie vorne erwähnt, wird entweder die zweite GRIN-Linse 31 des Anregungslichtleiters 11 oder die vierte GRIN-Linse 34 des Emissionslichtleiters 12 schiefwinklig zu ihrer optischen Achse geschnitten und die Schnittfläche anschliessend poliert. Der Anregungs-11 und der Emissionslichtleiter 12 werden dann in die Aufnahmeöffnungen des Halterungskörpers 17 eingebracht und mittels des Indexanpassungsmediums 20 zu der baulichen Einheit zusammengekittet. Natürlich ist die in Figur 3 dargestellte Anordnung rein beispielhaft. Der Emissionslichtleiter 12 mit dem photoelektrische Fühler 13 und der Anregungslichtleiter 11 mit der Lichtquelle 10 können auch so angeordnet sein, dass die optische Achse O2 des Emissionslichtleiters 12 senkrecht auf der Endfläche 14 steht und die optische Achse O1 des Anregungslichtleiters 11 schiefwinklig dazu.

Da sich bei dem zweiten Ausführungsbeispiel das optische Filter 15 im wesentlichen in der Mitte des Anregungslichtleiters 11 befindet, kann die erste GRIN-Linse 30 näher an der Lichtquelle 10 plaziert werden, was zu dem Vorteil einer effizienteren Ausnutzung des von der Lichtquelle 10 emittierten Lichtes führt. Das von dem Punkt A kommende Anregungslicht, symbolisch durch die beiden Lichtstrahlen A1,A2 dargestellt wird durch die erste GRIN-Linse 30 in paralleles Licht transformiert. Das bedeutet, das die Lichtstrahlen A1,A2 senkrecht aus der dem optischen Filter 15 zugewandten planaren Begrenzungsfläche der ersten GRIN-Linse 30 austreten und somit auch senkrecht auf das optische Filter 15 treffen. Deshalb treten in dem optischen Filter 15 keine Dispersionseffekte auf. Nach Durchlaufen des optischen Filters 15 trifft das Anregungslicht als paralleles Lichtbündel ebenfalls senkrecht auf die planare Begrenzungsfläche der zweiten GRIN-Linse 31 und wird von dieser auf den Fokalpunkt B fokussiert. Da das Anregungslicht zwischen den beiden GRIN-Linsen 30,31 als paralleles Lichtbündel, welches sich in Richtung der optischen Achse ausbreitet, vorliegt, ist es für die optischen Abbildungseigenschaften des Anregungslichtleiters 11 belanglos, welche Dicke das optische Filter 15 aufweist, oder ob sich an dieser Stelle mehr als ein Filter befindet.

In analoger Weise verläuft der Lichtweg des Emissionslichts, das von dem Fokalpunkt B kommt. Das Emissionslicht ist in Figur 3 schematisch durch die beiden Lichtstrahlen P1,P2 dargestellt. Das Emissionslicht trifft ebenfalls als paralleles Lichtbündel senkrecht auf das zweite optische Filter 16, so dass auch in diesem keine Dispersionseffekte auftreten. Die dritte GRIN-Linse 32 fokussiert dann das Emissionslicht auf den Punkt C, der nun im Gegensatz zu Figur 1 direkt auf dem photoelektrischen Fühler 13 liegt.

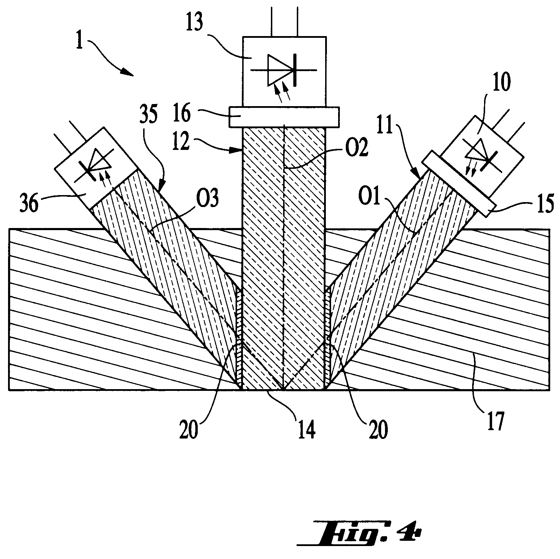

Figur 4 zeigt den optischen Teil eines dritten bevorzugten Ausführungsbeispiels der erfindungsgemässen Vorrichtung. Unterschiede zu den ersten beiden Ausführungsbeispielen sind nur in den optischen Teil vorhanden. Die bisherigen Ausführungen bezüglich der anderen Elemente, z. B. des gesammten mechanischen Teils, haben auch für das dritte Ausführungsbeispiel Gültigkeit, insbesondere lassen sich die erläuterten Varianten und vorteilhaften Massnahmen auch hier sinngemäss verwenden. In dem dritten Ausführungsbeispiel umfasst der optische Teil noch zusätzlich einen Referenzlichtleiter 35 und einen zweiten photoelektrischen Fühler 36. Der Referenzlichtleiter 35 umfasst ein Material, das einen Brechungsindexgradienten aufweist, welcher im wesentlichen senkrecht auf der Hauptausbreitungsrichtung des Lichtes in dem Referenzlichtleiter 35, die durch eine optische Achse O3 festgelegt ist, steht. Besonders bevorzugt umfasst der Referenzlichtleiter 35 mindestens ein optisches Gradienten-Index-Element, insbesondere eine GRIN-Linse.

Der Referenzlichtleiter 35 ist in analoger Weise mit der baulichen Einheit aus Anregungs-11 und Emissionslichtleiter 12 verbunden, wie es weiter vorne für das Zusammenfügen der genannten baulichen Einheit erläutert wurde. In dem in Figur 4 dargestellten Ausführungsbeispiel ist der Emissionslichtleiter 12 so angeordnet, dass seine optische Achse O2 senkrecht auf der Endfläche 14 steht, der Anregungslichtleiter 11 ist so angeordnet, dass seine optische Achse O1 schiefwinklig auf der Endfläche 14 steht und der Referenzlichtleiter 35 ist derart angeordnet, dass seine optische Achse O3 in der durch die beiden anderen optischen Achsen O1 und O2 festgelegten Ebene liegt und zudem mit der optischen Achse O2 im wesentlichen den gleichen Winkel einschliesst wie die beiden optischen Achsen O1 und O2 ihn einschliessen.

Die Verbindung zwischen dem Referenzlichtleiter 35 und dem zweiten photoelektrischen Fühler 36 erfolgt beispielsweise durch ein Haftmittel, bevorzugt durch ein solches, das dem Indexanpassungsmedium 20 entspricht. In dem in Figur 4 dargestellten Ausführungsbeispiel ist der Halterungskörper 17 mit einer zusätzlichen Aufnahmeöffnung für den Referenzlichtleiter 35 versehen.

Der Referenzlichtleiter 35 bietet zusammen mit dem zweiten photoelektrischen Fühler 36 den zusätzlichen Vorteil, dass Änderungen im Anregungslicht, z. B. Intensitätsschwankungen, erfassbar sind. Ein Teil des Anregungslichts wird im Bereich des Fluoreszenzwandlers 4 reflektiert und gelangt wegen der im wesentlichen symmetrischen Anordnung des Referenzlilchtleiters 35 und des Anregungslichtleiters 11 bezüglich des Emissionslichtleiters 12 durch den Referenzlichtleiter 35 auf den zweiten photoelektrischen Fühler 36. Durch einen Vergleich des von dem zweiten photoelektrischen Fühler 36 registrierten Signals, welches als Referenz für das Anregungslicht dient, mit dem von dem Emissionslicht in dem photoelektrischen Fühler 13 erzeugten Signal kann somit die Genauigkeit der eigentlichen Messung weiter gesteigert werden.

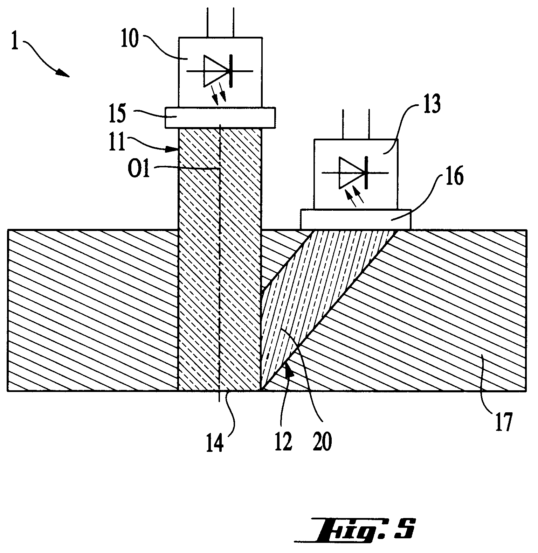

In Figur 5 ist der optische Teil eines vierten, ebenfalls bevorzugten Ausführungsbeispiels der erfindungsgemässen Vorrichtung dargestellt. In diesem Ausführungsbeispiel ist in dem Emissionslichtleiter keine GRIN-Linse oder sonstiges optischen Gradienten-Index-Element vorgesehen. Der Emissionslichtleiter 12 besteht mit Ausnahme des zweiten optischen Filters 16 vollständig aus dem Indexanpassungsmedium 20, das heisst die durch die Aufnahmeöffnung des Halterungskörpers 17 für den Emissionslichtleiter 12 gebildete räumliche Entfernung zwischen dem Anregungslichtleiter 11 und dem zweiten optischen Filter 16 ist durch das Indexanpassungsmedium 20 überbrückt. Natürlich ist das zweite optische Filter auch in diesem Ausführungsbeispiel nur optional vorhanden. Wird auf dieses Filter 16 verzichtet, so verbindet das Indexanpassungsmedium den Anregungslichtleiter 11 direkt mit dem photoelektrischen Fühler 13.

Dieses vierte Ausführungsbeispiel ist besonders in solchen Fällen bevorzugt, in denen die Intensität des Emissionslichts gross genug ist, um auf die optischen Fokussiereigenschaften des Emissionslichtleiters 12 verzichten zu können, denn im Vergleich zu den anderen Ausführungsbeispielen ist das in Figur 5 dargestellte technisch noch deutlich einfacher und auch kostengünstiger herzustellen.

Natürlich können die vorangehend erläuterten Varianten und Massnahmen, z. B. bezüglich der Ausgestalltung des mechanischen Teils und bezüglich der Anordnung von Anregungs-11 und Emissionslichtleiter 12, auch bei dem vierten Ausführungsbeispiel sinngemäss Verwendung finden. Ferner kann auch hier der zusätzliche Referenlichtleiter 35 vorgesehen sein.

Ein weiterer Gegenstand dieser Erfindung ist das optischen Detektiergerät zur analytischen Messung von Substanzen, welches mehrere, bevorzugt sechs, der erfindungsgemässen optischen Detektionsvorrichtungen verwendet. Da auch dieses Gerät den Vorteil aufweist, dass der mechanische Teil in einfacher Weise von dem optischen Teil trennbar ist, eignet sich das erfindungsgemässe Gerät für eine Vielzahl von Anwendungen, besonders für solche, bei denen eine Substanz, beispielsweise Blut, bezüglich mehrerer Inhaltsstoffe zu untersuchen ist. Die platzsparende Ausgestaltung der erfindungsgemässen Vorrichtung erlaubt für das erfindungsgemässe Gerät eine besonders kompakte Form, wodurch es sich für den mobilen Einsatz besonders eignet.

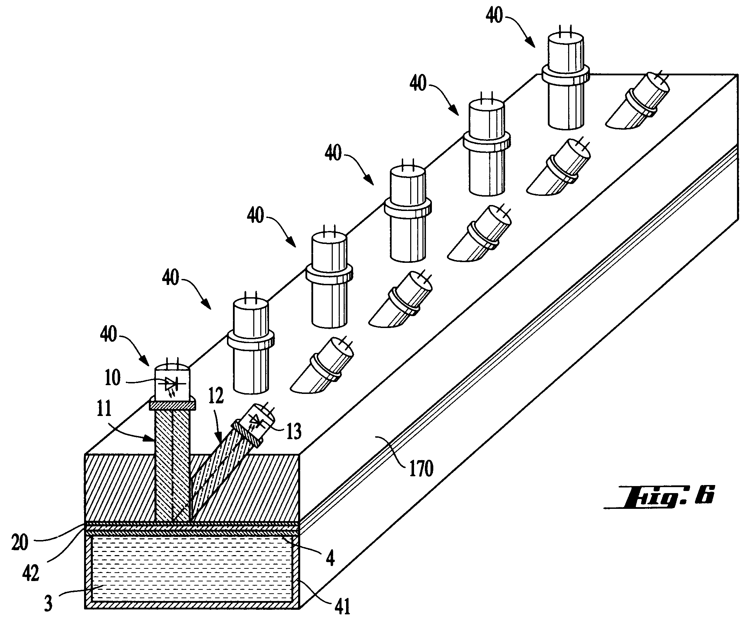

Gemäss der Erfindung umfasst das optische Detektiergerät mindestens zwei erfindungsgemässe optische Detektiervorrichtungen wie sie vorne beschrieben sind. Figur 6 zeigt eine schematische perspektivische Darstellung eines bevorzugten Ausführungsbeispiels des erfindungsgemässen Geräts, wobei die vordere Fläche im Schnitt dargestellt ist. In diesem Ausführungsbeispiel umfasst das Gerät sechs optische Detektionsvorrichtungen. Mit dem Bezugszeichen 40 ist in dieser Figur 3 jeweils eine optische Einheit, bestehend aus der Lichtquelle 10, dem Anregungslichtleiter 11, dem Emissionslichtleiter 12, dem die beiden letzt genannten verbindende Indexanpassungsmedium 20 und dem photoelektrischen Fühler 13, bezeichnet. Natürlich können die Lichtleiter 11,12 optional noch die optischen Filter 15,16 umfassen.

Die optischen Einheiten 40 befinden sich besonders bevorzugt in paarweise zueinander geneigten Aufnahmeöffnungen des Halterungskörpers 170. Die Probenbehälter 2 werden durch eine gemeinsame Messkammer 41 für die Substanz 3 gebildet. Rein beispielhaft ist die Messkammer 41 im wesentlichen quaderförmig ausgestaltet. Die Fluoreszenzwandler 4 befinden sich auf einem gemeinsamen Trägerelement 42, das besonders bevorzugt einen Brechungsindex aufweist, der bis auf im wesentlichen +/- 20% mit den Brechungsindices der Lichtleiter 11,12 übereinstimmt. Das Trägerelement 42 mit den Fluoreszenzwandlern 4 bildet im wesentlichen eine der Begrenzungsflächen der Messkammer 41 und zwar derart, dass die Fluoreszenzwandler dem Innenraum der Messkammer 41 zugewandt sind und somit von der Substanz 3 kontaktierbar sind.

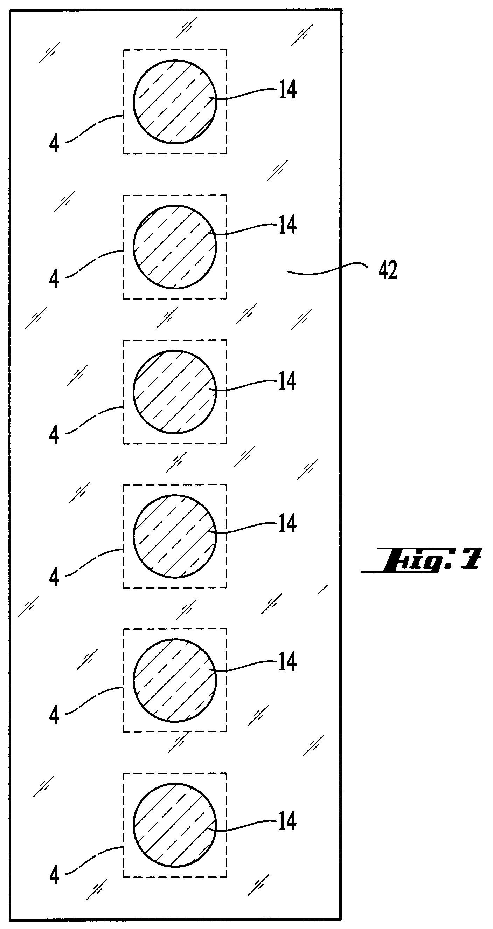

Figur 7 zeigt rein beispielhaft eine Möglichkeit, wie das Trägerelement 42 mit den Fluoreszenzwandlern 4 ausgestaltet sein kann. Die verschiedenen Fluoreszenzwandler 4 sind in Form von Schichten, die beispielsweise eine Dicke von weniger als ∼15 µm aufweisen, auf dem Trägerelement 42 deponiert. Die in Figur 7 dargestellte rechteckige Form ist natürlich beispielhaft. Die Fluoreszenzwandler 4 können auch eine im wesentlichen runde Form aufweisen. Es ist z. B. möglich, die verschiedenen Fluoreszenzwandler 4 direkt auf dem Trägerelement 42 zu deponieren. Bei einer anderen Variante wird zunächst jeder der Fluoreszenzwandler 4 auf einem der Träger 5 aufgebracht und die verschiedenen Träger 5 mit den Fluoreszenzwandlern 4 werden dann, nachdem sie in einer geeigneten Form vorliegen, miteinander verbunden , um so im wesentlichen das Trägerelement 42 zu bilden.

In Figur 6 ist der mechanische Teil des erfindungsgemässen Gerätes, der zumindest die Messkammer 41 für die Substanz 3 und das Trägerelement 42 mit den Fluoreszenzwandlern 4 umfasst, mit dem optischen Teil der die optischen Einheiten 40 in dem Halterungskörper 170 umfasst, durch das Indexanpassungsmedium 20 verbunden. Die Verbindung erfolgt derart, dass den verschiedenen optischen Einheiten 40 jeweils genau ein Fluoreszenzwandler 4 zugeordnet ist. Das bedeutet, wie in Figur 7 schematisch dargestellt, dass jeder der Fluoreszenzwandler 4 mit einer der Endflächen 14 der Lichtleiter 11,12 optisch verbunden ist. Das hat den Vorteil, dass jeder der Fluoreszenzwandler 4 im wesentlichen nur von dem Anregungslicht getroffen wird, welches aus der Endfläche 14 der ihm zugeordneten optischen Einheit 40 austritt und dass das von demselben Fluoreszenzwandler emittierte Emissionslicht im wesentlichen nur den photoelektrischen Fühler 13 der zugeordneten optischen Einheit 40 trifft. Ein weiterer Vorteil ist es, dass die verschiedenen Fluoreszenzwandler 4 für verschiedene Inhaltsstoffe der Substanz 3 empfindlich sein können. Damit lässt sich die Substanz 3 in einem Messvorgang bezüglich mehrerer Inhaltsstoffe untersuchen.

Die verschiedenen Ausgestaltungsformen, vorteilhaften Massnahmen und Varianten, die weiter vorne für die erfindungsgemässe optische Detektionsvorrichtung beschrieben sind, können natürlich auch in entsprechender Weise für das optische Detektiergerät Verwendung finden.

So kann sich z. B. die Substanz 3 in ruhender oder in fliessender Form in der Messkammer 41 befinden.

Es ist beispielsweise auch möglich, den optischen und den mechanischen Teil des erfindungsgemässen Gerätes direkt, also ohne das Indexanpassungsmedium 20, miteinander zu verbinden. Dies kann in analoger Weise erfolgen, wie es weiter vorne für die Detektiervorrichtung beschrieben ist.

Ebenfalls in Analogie zu der Detektiervorrichtung können die Messkammer 41 und das Trägerelement 42 mit den Fluoreszenzwandlern 4 in Form einer Kapillare für die Substanz 3 ausgestaltet sein, z. B. derart, dass verschiedene räumlich im wesentlichen getrennte Bereiche der Kapillare mit den Fluoreszenzwandlern 4 für verschiedene Inhaltsstoffe der Substanz 3 empfindlich sind.

Ferner kann in mindestens einer der optischen Einheiten 40 zusätzlich ein Referenzlichtleiter mit einem weiteren photoelektrischen Fühler vorgesehen sein, entsprechend den in Figur 4 mit den Bezugszeichen 35 und 36 bezeichneten Elementen. Auf diese Weise kann auch mit dem optischen Detektiergerät ein Referenzsignal registriert werden, mit dem Änderungen im Anregungslicht erfassbar sind.

Alternativ ist es aber auch möglich, zur Erzeugung des Referenzsignals anstelle der zusätzlichen Referenzlichtleiter eine der in Figur 6 dargestellten optischen Einheiten zu verwenden. Bei diesem Ausführungsbeispiel werden dann fünf der optischen Einheiten 40 zur analytischen Messung der Substanz verwendet und eine der optischen Einheiten 40 zur Erzeugung des Referenzsignals. Da in der Regel alle Lichtquellen 10 von der selben Spannungsquelle versorgt werden, sind mit einer solchen Anordnung beispielsweise Schwankungen in der Intensität des Anregungslichts detektierbar.

Weiterhin ist das optische Analysegerät für Fluoreszenzmessungen an einer Substanz Gegenstand der Erfindung. Das Analysegerät umfasst eine Messvorrichtung 50 zur Durchführung der Fluoreszenzmessung, eine elektronische Versorgungs- und Steuereinheit 90, welche die Messvorrichtung 50 mit Strom versorgt, eine Verstärkungs-und Auswerteelektronik 80, welche die von der Messvorrichtung bereitgestellten Signale verarbeitet, sowie eine Temperaturmess- und Regelvorrichtung 70, welche zumindest die Temperatur der Substanz 3 in der Messvorrichtung 50 kontrolliert und stabilisiert. Erfindungsgemäss ist die Messvorrichtung 50 ein optisches Detektiergerät oder eine optische Detektionsvorrichtung, wie sie Gegenstand der Erfindung und vorne beschrieben sind.

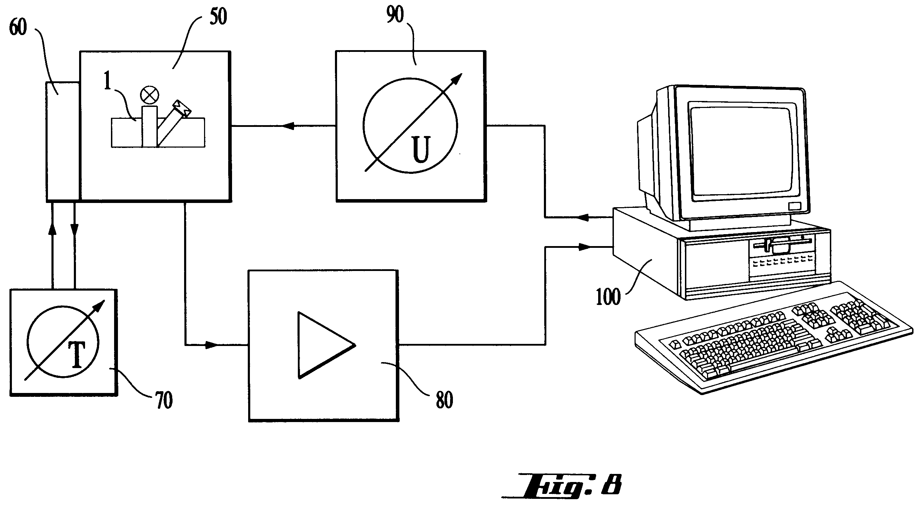

Eine bevorzugte Ausgestaltungsform des erfindungsgemässen Analysegerätes ist schematisch in Figur 8 dargestellt. Die Messvorrichtung 50 umfasst das optische Detektiergerät mit sechs optischen Einheiten 40, in denen die Lichtquellen 10 LEDs sind. Die elektronische Versorgungs- und Steuereinheit 90 umfasst eine stabilisierte Spannungsquelle, welche die LEDs mit Strom versorgt. Die Verstärkungs- und Auswerteelektronik 80 empfängt die Signale von den photoelektrischen Fühlern 13, verarbeitet sie weiter, z. B. mittels einem Verstärker, und stellt sie zur endgültigen Auswertung bereit. Die endgültige Auswertung, die Visualisierung oder der Ausdruck der Messergebnisse kann dann mittels einer elektronischen Datenverarbeitungsanlage 100 erfolgen, die auch zur gesamten Messprozesssteuerung sowie beispielsweise zum Abspeichern der Daten Verwendung finden kann.

In diesem Ausführungsbeispiel erfolgt die Temperaturkontrolle, indem die Messvorichtung 50 in einem Gehäuse aus einem gut wärmeleitenden Material enthalten ist, wobei die Temperatur des Gehäuses und damit die der Messvorrichtung 50 mit der in ihr enthaltenen Substanz 3 über ein Peltier-Element 60 beeinfluss- und stabilisierbar ist. Das Peltier-Element 60 wird von der Temperaturmess- und Regelvorrichtung 70 versorgt und gesteuert. Somit kann die Untersuchung der Substanz 3 bei einer gewünschten stabilisierbaren Temperatur erfolgen.

Das erfindungsgemässe Analysegerät bringt somit die Vorteile der erfindungsgemässen Detektiervorrichtung bzw. des erfindungsgemässen Detektiergerätes mit sich. Insbesondere hat das Analysegerät den Vorteil, dass der mechanische Teil der Messvorrichtung in einfacher Weise ausgewechselt werden kann, ohne das weitere Manipulationen an dem optischen Teil der Messvorrichtung nötig sein. Dadurch kann der optische Teil, der mehrfach verwendbar ist, qualitativ höherwertig und der mechanische Teil für den Einmalgebrauch ausgestaltet sein. Deshalb ist das erfindungsgemässe Analysegerät rationell herstellbar, bezüglich seines Einsatzes sehr flexibel und eignet sich für zahlreiche Anwendungen auch ausserhalb moderner Analyse- und Forschungslabors. Die mechanisch stabile Ausgestalltung des optischen Teils macht das Analysegerät robust und unempfindlich gegenüber Erschütterungen und Vibrationen. Zusammen mit der einfachen Handhabung eignet sich das erfindungsgemässe Analysegerät deshalb besonders auch für den mobilen Einsatz.

## Patentansprüche

1. Optische Detektionsvorrichtung (1) für analytische Messungen an einer Substanz (3), umfassend einen Probenbehälter (2) für die Substanz (3), einen Fluoreszenzwandler (4), der von der Substanz (3) kontaktierbar ist, eine Lichtquelle (10) zum Aussenden eines Anregungslichts, einen photoelektrischen Fühler (13) für ein von dem Fluoreszenzwandler (4) kommendes Emissionslicht, einen Anregungslichtleiter (11), der das von der Lichtquelle (10) emittierte Anregungslicht im wesentlichen so führt, dass es zumindest einen Teil des Fluoreszenzwandlers (4) trifft, sowie einen Emissionslichtleiter (12), der das von dem Fluoreszenzwandler (4) emittierte Licht im wesentlichten so führt, dass es den photoelektrischen Fühler (13) trifft, wobei zumindest der Anregungslichtleiter (11) ein Material umfasst, das einen Brechungsindexgradienten aufweist, der im wesentlichen senkrecht auf der Hauptausbreitungsrichtung des Lichtes in dem Lichtleiter steht, dadurch gekennzeichnet, dass der Anregungslichtleiter (11) derart mit dem Emissionslichtleiter (12) verbunden ist, dass die beiden Lichtleiter (11,12) im wesentlichen eine bauliche Einheit mit einer dem Fluoreszenzwandler (4) zugewandten Endfläche (14) bilden, wobei die Endfläche (14) körperlich im wesentlichen mit einer der Bregrenzungsflächen der beiden genannten Lichtleiter (11,12) übereinstimmt und wobei die genannte Endfläche (14) im wesentlichen sowohl die optische Austrittsfläche für das von der Lichtquelle (10) durch den Anregungslichtleiter (11) gelangende Licht als auch die optische Eintrittsfläche für das von dem Fluoreszenzwandler (4) kommende Emissionslicht bildet.

2. Vorrichtung nach Anspruch 1, dadurch gekennzeichnet, das der Emissionslichtleiter (12) und der Anregungslichtleiter (11) mittels eines Indexanpassungsmediums (20) zusammengekittet sind.

3. Vorrichtung nach einem der vorangehenden Ansprüche, dadurch gekennzeichnet, dass der Emissionslichtleiter (12) und der Anregungslichtleiter (11) relativ zueinander derart geneigt angeordnet sind, dass die Hauptausbreitungsrichtungen des Lichts in den beiden Lichtleitern (11,12), festgelegt durch optische Achsen (O1,O2), schiefwinklig zueinander stehen.

4. Vorrichtung nach einem der vorangehenden Ansprüche, dadurch gekennzeichnet, dass sich der Fluoreszenzwandler (4) auf einem Träger (5) befindet, dessen Brechungsindex bis auf im wesentlichen +/- 20% mit den Brechungsindices der beiden Lichtleiter (11,12) übereinstimmt, und dass der Träger (5) mit der Endfläche (14) der beiden Lichtleiter (11,12) optisch, insbesondere durch das Indexanpassungsmedium (20), verbunden ist.

5. Vorrichtung nach einem der vorangehenden Ansprüche, dadurch gekennzeichnet, dass eine Knotenlinie der aus dem Anregungslichtleiter (11) und aus dem Emissionslichtleiter (12) gebildeten baulichen Einheit im wesentlichen im Bereich des Fluoreszenzwandlers (4) liegt.

6. Vorrichtung nach einem der vorangehenden Ansprüche, dadurch gekennzeichnet, dass der Anregungslichtleiter (11) und/oder der Emissionslichtleiter (12) mindestens ein optisches Gradienten-Index-Element, insbesondere eine GRIN-Linse (30,31,32,33), beinhaltet.

7. Vorrichtung nach einem der vorangehenden Ansprüche, dadurch gekennzeichnet, dass der Anregungslichtleiter (11) mindestens ein optisches Filter (15), insbesondere ein Interferenzfilter, zur Selektion des Wellenlängenbereichs des Anregungslichts umfasst.

8. Vorrichtung nach einem der vorangehenden Ansprüche, dadurch gekennzeichnet, dass der Emissionslichtleiter (12) mindestens ein zweites optisches Filter (16), insbesondere ein Interferenzfilter, zur Selektion des Wellenlängenbereichs des Lichts, welches den photoelektrischen Fühler (13) trifft, umfasst.

9. Vorrichtung nach einem der vorangehenden Ansprüche, dadurch gekennzeichnet, dass die Lichtquelle (10) eine Leuchtdiode ist, die kohärentes oder inkohärentes Licht ausstrahlt.

10. Vorrichtung nach einem der vorangehenden Ansprüche, dadurch gekennzeichnet, dass sich der Anregungslichtleiter (11) und der Emissionslichtleiter (12) in zueinander geneigten Aufnahmeöffnungen eines Halterungskörpers (17;170) befinden.

11. Vorrichtung nach einem der vorangehenden Ansprüche, dadurch gekennzeichnet, dass der Emissionslichtleiter (12) mit Ausnahme des gegebenenfalls in ihm enthaltenen zweiten optischen Filters (16) im wesentlichen aus dem Indexanpassungsmedium (20) hergestellt ist.

12. Vorrichtung nach einem der vorangehenden Ansprüche, dadurch gekennzeichnet, dass zusätzlich ein Referenzlichtleiter (35) mit einer optischen Achse (O3) vorgesehen ist, welcher derart mit der baulichen Einheit aus dem Anregungslichtleiter (11) und dem Emissionslichtleiter (12) verbunden ist, insbesondere mittels des Indexanpassungsmediums (20), dass die optischen Achsen (O1,O2,O3) der drei Lichtleiter (11,12,35) in einer Ebene liegen und zwei der optischen Achsen mit der dritten jeweils im wesentlichen den gleichen Winkel einschliessen, und dass ferner an der der Endfläche (14) der baulichen Einheit abgewandten planaren Begrenzungsfläche des Referenzlichtleiters (35) ein zweiter photoelektrischer Fühler (36) vorgesehen ist.

13. Optisches Detektiergerät zur analytischen Messung von Substanzen, dadurch gekennzeichnet, dass es mindestens zwei, vorzugsweise sechs optische Detektionsvorrichtungen (1) umfasst, von denen jede gemäss einem der vorangehenden Ansprüche ausgebildet ist.

14. Gerät nach Anspruch 13, dadurch gekennzeichnet, dass sich zumindest sämtliche Anregungslichtleiter (11) und Emissionslichtleiter (12) in paarweise zueinander geneigten Aufnahmeöffnungen des Halterungskörpers (170) befinden.

15. Gerät nach einem der Ansprüche 13-14, dadurch gekennzeichnet, dass sämtliche Probenbehälter (2) durch eine gemeinsame Messkammer (41) gebildet sind.

16. Gerät nach einem der Ansprüche 13-15, dadurch gekennzeichnet, dass sich die Fluoreszenzwandler (4) auf einem gemeinsamen Trägerelement (42) befinden, wobei das Trägerelement (42) einen Brechungsindex aufweist, der bis auf im wesentlichen +/-20% mit den Brechungsindices der Lichtleiter (11,12) übereinstimmt, und dass das genannte Trägerelement (42) mit den Endflächen der Lichtleiter verbunden ist, insbesondere durch das Indexanpassungsmedium (20).

17. Gerät nach einem der Ansprüche 13-16, dadurch gekennzeichnet, dass jedem der Anregungs-/Emissionslichtleiter (11,12) ein eigener Fluoreszenzwandler (4) zugeordnet ist, der im wesentlichen nur von dem Anregungslicht aus dem zugeordneten Anregungslichtleiter (11) getroffen wird.

18. Gerät nach einem der Ansprüche 13-17, dadurch gekennzeichnet, dass die Fluoreszenzwandler (4) für verschiedene Inhaltsstoffe der Substanz (3) empfindlich sind.

19. Optisches Analysegerät für Fluoreszenzmessungen an der Substanz (3), umfassend eine Messvorrichtung (50) für Fluoreszenzuntersuchungen, eine elektronische Versorgungs- und Steuereinheit (90), welche den Strom für die verschiedenen Elemente der Messvorrichtung (50) liefert, eine Verstärkungs- und Auswerteelektronik (80), welche die von der Messvorrichtung gelieferten Signale verarbeitet, sowie eine Temperaturmess-und Regelvorrichtung (70) zur Temperaturkontrolle und -stabilisierung, dadurch gekennzeichnet, dass die Messvorrichtung (50) eine optische Detektionsvorrichtung (1) gemäss einem der Ansprüche 1-12 enthält, oder ein optisches Detektiergerät gemäss einem der Ansprüche 13-18.
